# EUROPÄISCHE PATENTSCHRIFT

(11) **EP 1 581 411 B1**
(45) Veröffentlichungstag und Bekanntmachung des Hinweises auf die Patenterteilung: **18.06.2008**
(21) Anmeldenummer: 03788886.4
(22) Anmeldetag: 19.12.2003
(51) Int. Cl.: B60R 1/04

(54) **INNENRÜCKBLICKSPIEGEL FÜR FAHRZEUGE, VORZUGSWEISE FÜR KRAFTFAHRZEUGE**
INTERIOR REAR VIEW MIRROR FOR VEHICLES, PREFERABLY MOTOR VEHICLES
RETROVISEUR INTERIEUR POUR VEHICULES, DE PREFERENCE POUR VEHICULES AUTOMOBILES

(30) Priorität: 02.01.2003 DE 10300232
(43) Veröffentlichungstag der Anmeldung: 05.10.2005
(73) Patentinhaber: Visiocorp Patents S.à.r.l., 2346 Luxembourg (LU)
(72) Erfinder: ROMMEL, Bernd, 70736 Fellbach-Schmiden (DE)
(74) Vertreter: Rausch, Gabriele
(86) Internationale Anmeldenummer: PCT/DE2003/004242
(87) Internationale Veröffentlichungsnummer: WO 2004/060721

(56) Entgegenhaltungen:
- EP-A- 0 899 157
- WO-A-03/095269
- GB-A- 2 190 516
- US-B1- 6 222 460

## Beschreibung

Die Erfindung betrifft einen Innenrückblickspiegel für Fahrzeuge, vorzugsweise für Kraftfahrzeuge, nach dem Oberbegriff des Anspruches 1 bzw. 3.

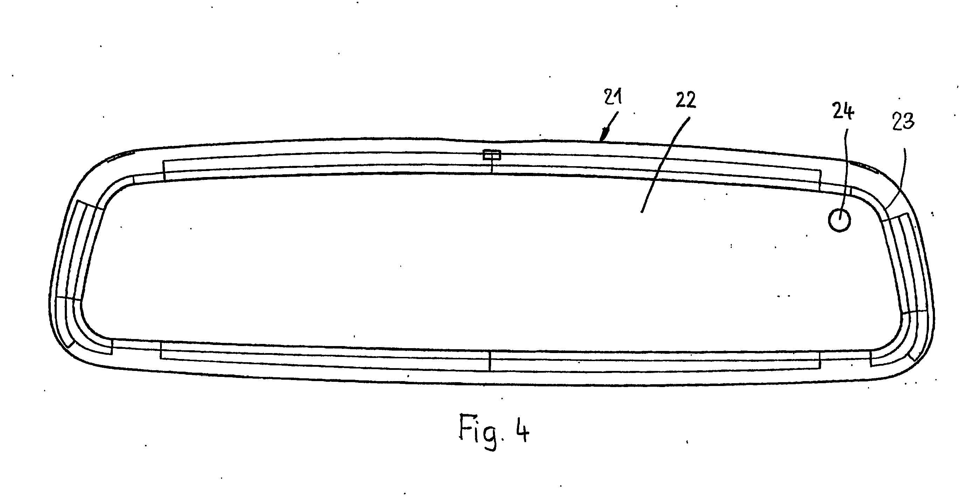

Es sind Innenrückblickspiegel für Kraftfahrzeuge bekannt, die mit einem EC-Blendlichtsensor versehen sind, der von nachfolgenden Fahrzeugen ausgehendes Scheinwerferlicht erfaßt und bei Überschreiten eines vorgegebenen Wertes den Innenrückblickspiegel so abblendet, daß der Fahrer nicht mehr geblendet wird. Fig. 4 zeigt einen solchen Innenrückblickspiegel mit einem Spiegelgehäuse 21, das eine Aufnahmeöffnung für ein Spiegelglas 22 begrenzt. Hinter dem Spiegelglas 22 befindet sich die EC-Elektronikplatine nahe einem Seitenrand 23 des Spiegelgehäuses 21. Der auf der Elektronikplatine sitzende Blendlichtsensor 24 befindet sich nahe dem Seitenrand 23 des Spiegelgehäuses 21 und ist hinter dem Spiegelglas 22 sichtbar. Da für die Elektronikplatine nur im Seitenbereich des Spiegelgehäuses 21 eine Einbaumöglichkeit vorhanden ist, kann der Sensor bei diesem bekannten Innenrückblickspiegel nur im seitlichen Bereich vorgesehen werden.

Es ist weiter ein Innenrükblickspiegel aus der Zwischenveröffentlichung (WO 03/095269 A) bekannt, bei dem zwei Sensoren auf einer Platine sitzen, die ihrerseits mit einer Elektronikplatine drahtverbunden ist, die im Spiegelgehäuse vorgesehen ist.

Der Erfindung liegt die Aufgabe zugrunde, den gattungsgemäßen Innenrückblickspiegel so auszubilden, daß der Sensor auch bei beengten Einbauverhältnissen an jeder gewünschten Einbaustelle eingebaut werden kann.

Diese Aufgabe wird beim gattungsgemäßen Innenrückblickspiegel erfindungsgemäß mit den kennzeichnenden Merkmalen des Anspruches 1 bzw. 3 gelöst.

Beim Innenrückblickspiegel sitzt der Sensor auf der Sensorplatine, die von der Elektronikplatine räumlich getrennt ist. Die Sensorplatine hat nur kleine Abmessungen, so daß sie innerhalb des Spiegelgehäuses an jeder beliebigen Stelle eingebaut werden kann. Insbesondere läßt sich die Sensorplatine mit dem Sensor im mittleren Bereich des Spiegelglases bzw. des Spiegelgehäuses unterbringen. Der in diesem Bereich hinter dem Spiegelglas üblicherweise vorgesehene Stellantrieb für den Innenrückblickspiegel oder die Trägerplatte des Innenspiegels sind beim Einbau der Sensorplatine nicht hinderlich. Die Elektronikplatine kann im Spiegelgehäuse dort eingebaut werden, wo ausreichend Einbauraum zur Verfügung steht. Die Sensorplatine und die Elektronikplatine sind miteinander signalverbunden, so daß die Signale des Sensors zuverlässig zur Elektronikplatine gelangen. Der Sensor liegt im Erfassungsbereich der Signale, die von außen auf den Innenrückblickspiegel treffen. Unter Signale sich auch von hinten auf den Innenrückblickspiegel gelangende Lichtstrahlen zu verstehen, die von den Scheinwerfern nachfolgender Kraftfahrzeuge stammen.

Bei der erfindungsgemäßen Ausbildung nach Anspruch 1 die Sensorplatine über wenigstens eine flexible Leitung mit der Elektronikplatine signalverbunden. Die flexible Leitung erlaubt es, die Sensorplatine mit dem Sensor an jeder gewünschten Stelle innerhalb des Spiegelgehäuses einzubauen.

Bei der erfindungsgemäßen Ausbildung nach Anspruch 3 sind die Sensorplatine und die Elektronikplatine drahtlos miteinander signalverbunden. Auch dadurch kann der Sensor bei beengten Einbauverhältnissen an jeder gewünschten Stelle innerhalb des Innenrückblickspiegels eingebaut werden.

Weitere Merkmale der Erfindung ergeben sich aus den weiteren Ansprüchen, der Beschreibung und den Zeichnungen.

Die Erfindung wird nachstehend anhand eines in den Zeichnungen dargestellten Ausführungsbeispieles näher erläutert. Es zeigen
- Fig. 1: in Vorderansicht einen erfindungsgemäßen Innenrückblickspiegel ohne Spiegelglas,
- Fig. 2: einen Querschnitt durch den Innenrückblickspiegel gemäß Fig. 1,
- Fig. 3: in vergrößerter Darstellung den Einbauort eines Sensors des erfindungsgemäßen Innenrückblickspiegels im Querschnitt,
- Fig. 4: in Vorderansicht einen Innenrückblickspiegel nach dem Stand der Technik.

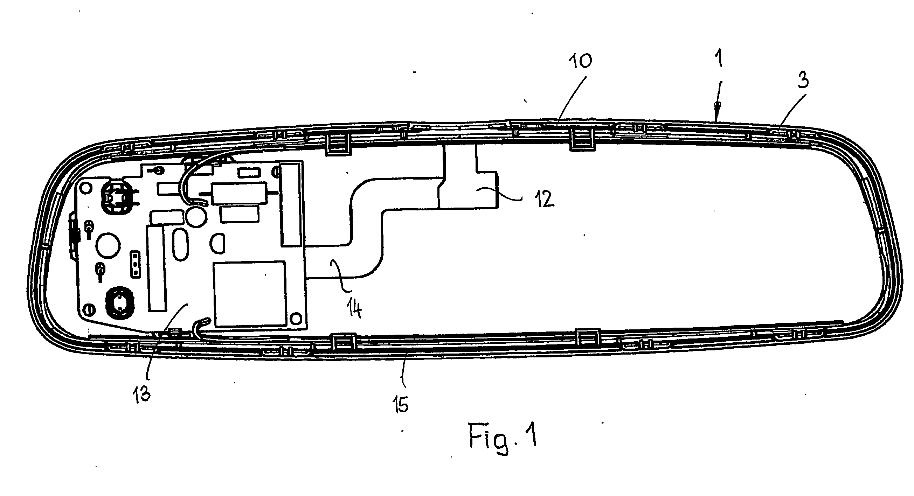

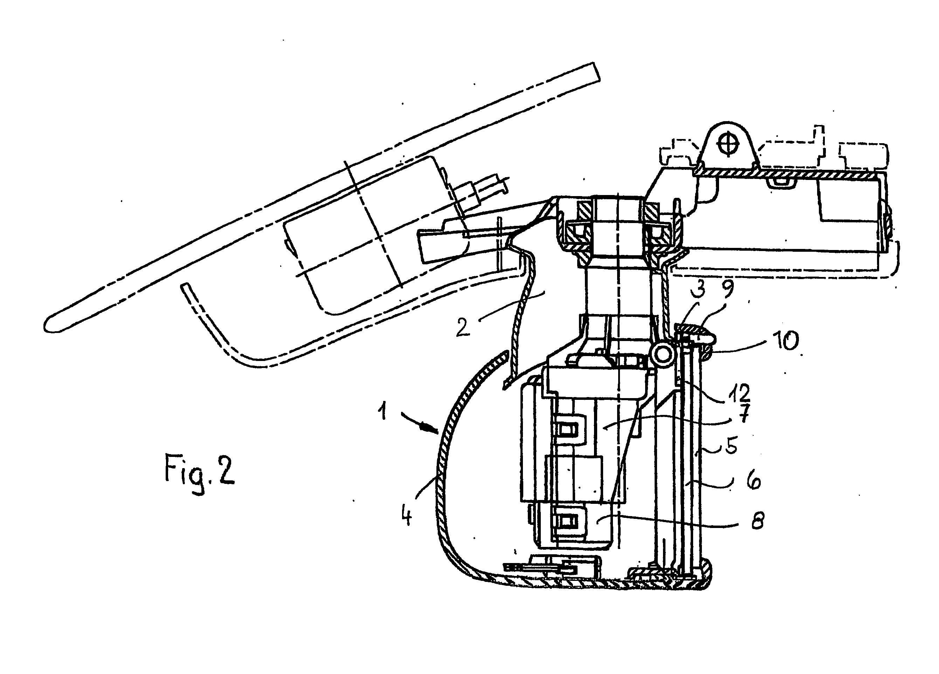

Der Innenrückblickspiegel für Kraftfahrzeuge hat ein Spiegelgehäuse 1, das über einen Spiegelfuß 2 in bekannter Weise innerhalb des Kraftfahrzeuges befestigt wird, beispielsweise am Dachhimmel oder an der Windschutzscheibe des Kraftfahrzeuges. Das Spiegelgehäuse 1 besteht aus einem Rahmen 3 und einer Kappe 4, die vorzugsweise lösbar mit dem Rahmen 3 verbunden ist, beispielsweise durch eine Rastverbindung. Der Rahmen 3 nimmt ein Spiegelglas 5 auf, das im Ausführungsbeispiel ein EC-Glas ist und auf einem Spiegelglasträger 6 sitzt. Der Rahmen 3 hat, wie sich aus Fig. 1 ergibt, etwa rechteckförmigen Umriß mit abgerundeten Ecken. Die Kappe 4 des Spiegelgehäuses 1 ist im Querschnitt (Fig. 2) konkav ausgebildet und nimmt einen Antrieb 7 auf, mit dem das Spiegelgehäuse 1 gegenüber dem Spiegelfuß 2 motorisch verstellt werden kann, um den Innenspiegel auf den Fahrer des Kraftfahrzeuges einzustellen. Solche Antriebe sind bekannt und werden darum auch nicht näher erläutert.

Der Antrieb 7 ist vorteilhaft ein Memoryantrieb, mit dem der Innenrückblickspiegel in abgespeicherte Positionen motorisch verstellt werden kann. Der Antrieb 7 befindet sich in halber Breite des Spiegelgehäuses 1. In diesem Bereich befindet sich auch eine Trägerplatte 8 des Innenrückblickspiegels.

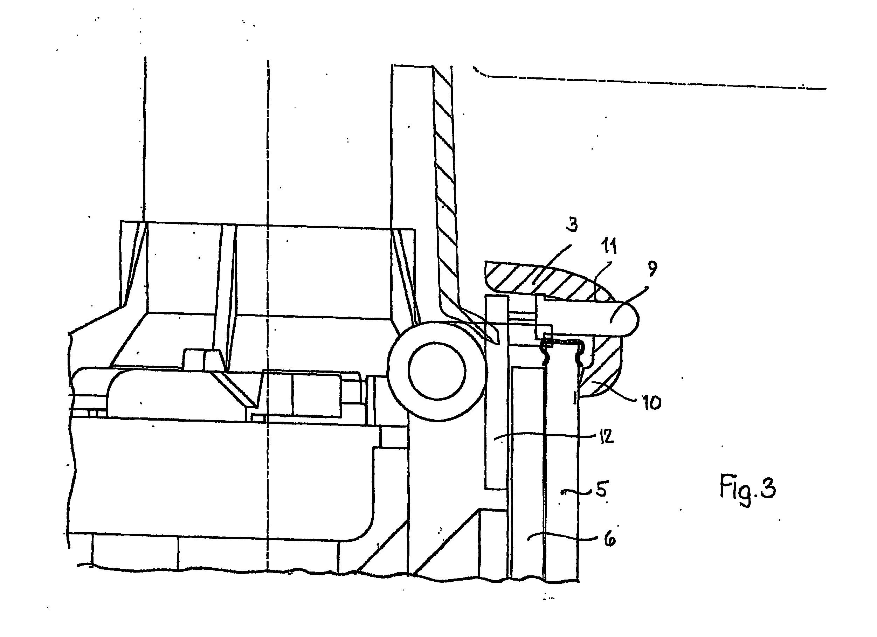

Der Innenrückblickspiegel ist mit wenigstens einem Blendlichtsensor 9 versehen, der im Ausführungsbeispiel am oberen Längsrand 10 des Rahmens 3 in halber Länge angeordnet ist. Dieser Blendlichtsensor 9 ist in Fahrtrichtung des Kraftfahrzeuges nach hinten gerichtet und erfaßt das von nachfolgenden Kraftfahrzeugen kommende Licht. Bei Überschreiten einer vorgegebenen Lichtstärke erzeugt der Blendlichtsensor 9 in bekannter Weise ein Signal, mit dem das EC-Spiegelglas 5 abgeblendet wird, so daß der Fahrer durch das von hinten kommende Licht nicht geblendet wird. Der Blendlichtsensor 9 sitzt in einer Aufnahmeöffnung 11 (Fig. 3) im oberen Längsrand 10 des Rahmens 3. Der Blendlichtsensor 9 ragt im Ausführungsbeispiel geringfügig über den Rahmen 3 vor. Es ist aber auch möglich, den Blendlichtsensor 9 so im Längsrand 10 des Rahmens 3 unterzubringen, daß er nicht über den Längsrand vorsteht. Er kann auch hinter einer für Lichtstrahlen durchlässigen Abdeckung versenkt liegen. In diesem Fall ist die Aufnahmeöffnung 11 so gestaltet, daß das von hinten kommende Licht vom Blendlichtsensor 9 einwandfrei erfaßt werden kann.

Der Blendlichtsensor 9 sitzt auf einer Sensorplatine 12, die unmittelbar hinter dem Spiegelglasträger 6 angeordnet ist. Sie ist sehr flach ausgebildet und hat nur eine kleine Grundfläche, so daß die Sensorplatine 12 auch in kleinen Einbauräumen ohne weiteres untergebracht werden kann. Die Sensorplatine 12 hat beispielsweise eine Grundfläche von etwa 1 cm² oder weniger. Die Sensorplatine 12 mit dem darauf montierten Blendlichtsensor 9 kann beispielsweise rastend am Rahmen 3 gehalten werden. Aufgrund der geringen Abmessungen läßt sich die Sensorplatine 12 problemlos im Bereich zwischen dem Antrieb 7 und dem Spiegelglasträger 6 in der Mitte des Innenrückblickspiegels unterbringen.

Die zur Auswertung der Signale des Blendlichtsensor 9 notwendigen elektronischen/elektrischen Bauteile befinden sich auf einer Platine 13 (Fig. 1), die im Bereich neben dem Antrieb 7 im Spiegelgehäuse 1 untergebracht ist. Wie sich aus Fig. 1 ergibt, befindet sich diese Hauptplatine 13 nahe der einen Schmalseite des Spiegelgehäuses 1. Dort ist ausreichend Platz, um die Hauptplatine 13 im Spiegelgehäuse 1 unterzubringen. Sie wird in geeigneter Weise im Spiegelgehäuse 1 befestigt.

Die Verbindung zwischen der Sensorplatine 12 und der Hauptplatine 13 erfolgt durch eine flexible Leiterbahn 14, die dünn ausgebildet ist und dadurch bequem im Spiegelgehäuse 1 auch bei beengten Einbauverhältnissen untergebracht werden kann.

Anstelle der flexiblen Leiterbahn 14 ist es auch möglich, die Signale des Blendlichtsensors 9 drahtlos an die entsprechenden Elemente auf der Hauptplatine 13 zu übertragen.

Aufgrund der beschriebenen Ausbildung kann der EC-Blendlichtsensor 9 mittig im Innenrückblickspiegel untergebracht werden. Aufgrund der räumlichen Trennung der Hauptplatine 13 und der Sensorplatine 12 kann der Blendlichtsensor 9 auch außermittig an jeder beliebigen Stelle des Innenrückblickspiegels vorgesehen sein. Der Blendlichtsensor 9 kann beispielsweise auch am unteren Längsrand 15 (Fig. 1) des Rahmens 3 angeordnet sein. Auch können weitere Blendlichtsensoren oder andere Sensoren am Innenrückblickspiegel vorgesehen und jeweils über eine flexible Leiterbahn oder drahtlos mit der Hauptplatine 14 leitungsverbunden sein.

Im Spiegelgehäuse 1 können zusätzlich Leselampen, Konsolenbeleuchtungen, Sender und/oder Empfänger von Garagentoröffnern, Lautsprecher, Kompaßeinrichtungen und dergleichen untergebracht sein.

## Patentansprüche

1. Innenrückblickspiegel für Fahrzeuge, vorzugsweise für Kraftfahrzeuge, mit einem Spiegelgehäuse (1), in dem wenigstens eine Elektronikplatine (13) für wenigstens einen Sensor (9) untergebracht ist, der im Erfassungsbereich von Signalen angeordnet ist, die von außen auf den Innenrückblickspiegel gelangen, und der auf einer Sensorplatine (12) sitzt, die von der Elektronikplatine (13) räumlich getrennt und mit ihr signalverbunden ist,
wobei die Sensorplatine (12) und die Elektronikplatine (13) durch wenigstens eine flexible Leitung (14) miteinander verbunden sind.

2. Innenrückblickspiegel nach Anspruch 1,
**dadurch gekennzeichnet, daß** die flexible Leitung (14) eine Leiterbahn ist.

3. Innenrückblickspiegel für Fahrzeuge, vorzugsweise für Kraftfahrzeuge, mit einem Spiegelgehäuse (1), in dem wenigstens eine Elektronikplatine (13) für wenigstens einen Sensor (9) untergebracht ist, der im Erfassungsbereich von Signalen angeordnet ist, die von außen auf den Innenrückblickspiegel gelangen, und der auf einer Sensorplatine (12) sitzt, die von der Elektronikplatine (13) räumlich getrennt und mit ihr signalverbunden ist,
wobei die Sensorplatte (12) drahtlos mit der Elektronikplatine (13) signalverbunden ist.

4. Innenrückblickspiegel nach einem der Ansprüche 1 bis 3,
**dadurch gekennzeichnet, daß** die Sensorplatine (12) im Bereich zwischen einem Stellantrieb (7) des Innenrückblickspiegels und einem Spiegelglas (5) angeordnet ist.

5. Innenrückblickspiegel nach einem der Ansprüche 1 bis 4,
**dadurch gekennzeichnet, daß** die Sensorplatine (12) am Rand (10, 15) des Spiegelgehäuses (1) befestigt ist.

6. Innenrückblickspiegel nach einem der Ansprüche 1 bis 5,
**dadurch gekennzeichnet, daß** der Sensor (9) in einer Aufnahmeöffnung (11) im Rand (10, 15) des Spiegelgehäuses (1) untergebracht ist.

7. Innenrückblickspiegel nach einem der Ansprüche 1 bis 6,
**dadurch gekennzeichnet, daß** der Sensor (9) mittig am Rand (10, 15) des Spiegelgehäuses (1) angeordnet ist.

8. Innenrückblickspiegel nach einem der Ansprüche 1 bis 7,
**dadurch gekennzeichnet, daß** der Sensor (9) ein EC-Blendlichtsensor ist.

9. Innenrückblickspiegel nach einem der Ansprüche 1 bis 8,
**dadurch gekennzeichnet, daß** das Spiegelgehäuse (1) einen Rahmen (3) und eine mit ihm verbundene Kappe (4) aufweist.

10. Innenrückblickspiegel nach einem der Ansprüche 1 bis 9,
**dadurch gekennzeichnet, daß** das Spiegelglas (5) ein EC-Spiegelglas ist.

## Claims

1. An interior rearview mirror for vehicles, preferably motor vehicles, comprising a mirror housing (1), in which at least one electronics circuit board (13) for at least one sensor (9) is disposed, which is mounted within the detection range of signals, reaching the inner rearview mirror from the outside, and which is located on a sensor circuit board (12), physically separated from the electronics circuit board (13), and connected with it through signals, wherein the sensor circuit board (12) and the electronics circuit board (13) are connected amongst each other by at least one flexible conductor (14).

2. An interior rearview mirror according to claim 1, wherein the flexible conductor (14) is a strip conductor.

3. An interior rearview mirror for vehicles, preferably motor vehicles, comprising a mirror housing (1), wherein at least one electronics circuit board (13) for at least one sensor (9) is disposed, which is located withinin the detection range of signals, which reach the interior rearview mirror from the outside, and which is located on a sensor circuit board (12), which is physically separated from the electronics circuit board (13) and connected with it through signals, wherein the sensor circuit board (12) is wirelessly connected to the electronics circuit board (13).

4. An interior rearview mirror according to one of the claims 1 through 3, wherein the sensor circuit board (12) is disposed in the portion between an actuator (7) of the interior rearview mirror and a mirror glass (5).

5. An interior rearview mirror according to one of the claims 1 through 4, wherein the sensor circuit board (12) is mounted to the rim (10, 15) of the mirror housing (1).

6. An interior rearview mirror according to one of the claims 1 through 5, wherein the sensor (9) is housed in a receiver opening (11) in the rim (10, 15) of the mirror housing (1).

7. An interior rearview mirror according to one of the claims 1 through 6, wherein the sensor (9) is centrally disposed at the rim (10, 15) of the mirror housing (1).

8. An interior rearview mirror according to one of the claims 1 through 7, wherein the sensor (9) is an EC blinding light sensor.

9. An interior rearview mirror according to one of the claims 1 through 8, wherein the mirror housing (1) comprises a frame (3) and a cap (4) connected therewith.

10. An interior rearview mirror according to one of the claims 1 through 9, wherein the mirror glass (5) is an EC mirror glass.

## Revendications

1. Rétroviseur intérieur pour véhicules, de préférence pour véhicules automobiles, avec un boîtier de rétroviseur (1), équipé d'au moins une carte électronique (13) pour au moins un détecteur (9), positionné dans la zone d'acquisition de signaux parvenant de l'extérieur sur le rétroviseur intérieur et reposant sur une carte capteur (12), séparée spatialement de la carte électronique (13) et reliée par signal à celle-ci, sachant que la carte capteur (12) et la carte électronique (13) sont raccordées l'une à l'autre par au moins une connexion flexible (14).

2. Rétroviseur intérieur selon la revendication 1, **caractérisé en ce que** la connexion flexible (14) est une piste conductrice.

3. Rétroviseur intérieur pour véhicules, de préférence pour véhicules automobiles, avec un boîtier de rétroviseur (1), équipé d'au moins une carte électronique (13) pour au moins un détecteur (9), positionné dans la zone d'acquisition de signaux parvenant de l'extérieur sur le rétroviseur intérieur et reposant sur une carte capteur (12), séparée spatialement de la carte électronique (13) et reliée par signal à celle-ci, sachant que la carte capteur (12) et la carte électronique (13) sont reliées par signal à l'aide d'une connexion sans fil.

4. Rétroviseur intérieur selon l'une des revendications 1 à 3, **caractérisé en ce que** la carte capteur (12) est placée entre un mécanisme d'entraînement (7) du rétroviseur intérieur et un miroir (5).

5. Rétroviseur intérieur selon l'une des revendications 1 à 4, **caractérisé en ce que** la carte capteur (12) est fixée au bord (10, 15) du boîtier de rétroviseur (1).

6. Rétroviseur intérieur selon l'une des revendications 1 à 5, **caractérisé en ce que** le détecteur (9) est positionné dans une ouverture de réception (11) en bordure (10,15) du boîtier de rétroviseur (1).

7. Rétroviseur intérieur selon l'une des revendications 1 à 6, **caractérisé en ce que** le détecteur (9) est centré au bord (10,15) du boîtier de rétroviseur (1).

8. Rétroviseur intérieur selon l'une des revendications 1 à 7, **caractérisé en ce que** le détecteur (9) est un détecteur électrochrome (EC) de lumière éblouissante.

9. Rétroviseur intérieur selon l'une des revendications 1 à 8, **caractérisé en ce que** le boîtier de rétroviseur (1) comporte un cadre (3) relié à un couvercle de protection (4).

10. Rétroviseur intérieur selon l'une des revendications 1 à 9, **caractérisé en ce que** le miroir (5) est un miroir électrochrome (EC).
